# EUROPEAN PATENT APPLICATION

(11) **EP 1 965 113 A1**
(43) Date of publication of application: **03.09.2008**
(21) Application number: 08102095.0
(22) Date of filing: 27.02.2008
(51) Int. Cl.: F16K 31/163, F16K 1/22

(54) **Actuator assembly with hermetic seal and magnetic rotational coupler**

(30) Priority: 28.02.2007 US 680241
(71) Applicant: Honeywell International Inc., Morristown, NJ 07962 (US)
(72) Inventor: Roundy, James, Gilbert, AZ 85234 (US)
(74) Representative: Buckley, Guy Julian

(57) **Abstract**

An actuator assembly including an actuator housing assembly having a piston rod (208) and a piston body (209) disposed at least partially therein and in substantial linear alignment. A linear variable differential transducer (LVDT) (204) is coupled to the piston rod (208) to provide linear positioning and configured to eliminate rotation of the piston rod (208). A rotational coupler (223), in the form of a helical groove and reciprocating guide member, couple the piston rod to the piston body. The rotational coupler (223) is configured to translate linear displacement of the piston rod into rotation of the piston body. A valve shaft is positioned in substantially linear alignment with and surrounding at least a portion of the piston body. A magnetic rotational coupler (230) couples the piston body to the valve shaft. The magnetic rotational coupler (203) is configured to create a magnetic field that translates rotational displacement of the piston body into rotation of the valve shaft.

## Description

### FIELD OF THE INVENTION

The present invention relates to valve actuation and, more particularly, to valves including rotating members and the actuation of such valves by transferring a linear input motion to a rotary output motion and thereby controlling operation of the valve.

### BACKGROUND OF THE INVENTION

Actuators are used in myriad devices and systems for the control of rotary valves. For example, many vehicles including, for example, aircraft, spacecraft, watercraft, and numerous other terrestrial and non-terrestrial vehicles, include one or more actuators to effect the movement of various rotary valve components, such as butterfly valves, ball valves, etc. One type of actuator that has been designed and implemented with rotary valves is a linear actuator.

In many instances a rotary valve and electro-mechanical actuator (EMA) are mounted to the vehicle and thereby increase the overall weight of the vehicle. Typically, these rotary valve and EMA systems include pressurized fluid that enters and expandable chamber to drive a piston, which is mechanically connected to a valve shaft of the rotary valve. This driving action by the piston causes the valve shaft to open or close the rotary valve.

These types of traditional rotary actuators are known in the art to control the operation of an associated valve by converting the linear stroke of the piston to a rotational movement of a driving member that engages the valve. The actuator is typically mounted in a cantilevered position relative to the valve body and includes a multi-sectioned lever type actuating arm that moves in response to the linear movement of the piston. The cantilevered actuator in these types of systems creates a high overhang moment. In addition, this type of offset piston drive valve includes a relatively long piston stroke to actuate the valve, thereby increasing the weight of the overall valve.

It should thus be appreciated from the above that it would be desirable to provide a compact and lightweight electro-mechanical actuator assembly that eliminates the long piston stroke and high overhang moment. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

There has now been developed an actuator assembly for operation of a rotational valve, the actuator assembly comprising: an actuator housing assembly; a linear drive mechanism comprised of a piston rod mounted for reciprocating linear stroke motion within a piston body, the linear drive mechanism disposed at least partially within the actuator housing assembly and configured to translate therein without rotation; a rotational coupler coupling the piston rod to the piston body, and configured to translate linear displacement of the piston rod into rotation of the piston body; a valve shaft in substantially linear alignment with, and surrounding at least a portion of the piston body; and a magnetic rotational coupler coupling the piston body to the valve shaft and configured to translate rotational displacement of the piston body into rotation of the valve shaft.

In yet another embodiment, there is provided an actuator assembly for operation of a rotational valve, the actuator assembly comprising: an actuator housing assembly; a piston rod mounted for reciprocating linear stroke motion within a piston body and along a longitudinal axis of the actuator housing assembly, the piston rod and piston body disposed at least partially within the actuator housing assembly and configured to translate therein without rotation; a rotational coupler coupling the piston rod within the piston body, and configured to translate linear displacement of the piston rod into rotation of the piston body; a valve shaft including a first end portion coupled to the rotational valve and a second end portion coupled to the piston body and providing rotational displacement therein the second end of the piston body, the valve shaft in substantially linear alignment and surrounding at least a portion of the piston body; and a magnetic rotational coupler coupling the piston body to the second end portion of the valve shaft and configured to translate the rotational displacement of the piston body into rotation of the valve shaft.

In a further embodiment, still by way of example only, there is provided a linear actuator assembly for operation of a butterfly valve, the linear actuator assembly comprising: an actuator housing assembly; a piston rod mounted for reciprocating linear stroke motion within a piston body and configured to translate therein without rotation, the piston rod and piston body disposed at least partially within the actuator housing assembly; a butterfly valve shaft including a first end portion coupled to the butterfly valve and a second end portion coupled to the piston body and providing rotational displacement therein of the piston body, the butterfly valve shaft in substantially linear alignment and surrounding at least a portion of the piston body; a rotational coupler comprising a helical groove and a guide member configured to engage the helical groove, the rotational coupler coupling the piston rod within the piston body and configured to translate the linear stroke motion of the piston rod into rotational displacement of the piston body; and a magnetic rotational coupler comprised of at least one magnet coupled to the piston body and at least one magnetic coupled to the second end portion of the butterfly valve shaft, the magnetic rotational coupler configured to create a magnetic field between the piston body and the second end portion of the butterfly shaft and translate the rotational displacement of the piston body into rotation of the valve shaft.

Other independent features and advantages of the improved actuator assembly will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figure, wherein like numerals denote like elements, and:

FIG. 1 is a block diagram of a valve assembly and actuation control system, including an actuator assembly according to the present invention;

FIG. 2 is a cross-sectional view of a portion of an exemplary actuator assembly according to the present invention;

FIG. 3 is a cross-sectional view of a portion of another embodiment of the actuator assembly according to the present invention;

FIG. 4 is a top view of a portion of the actuator assembly according to the present invention; and

FIG. 5 is a top view of a portion of the actuator assembly according to the present invention.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention. In this regard, before proceeding with the detailed description, it is to be appreciated that the described embodiment is not limited to use in conjunction with a specific vehicle or system. Thus, although the description is explicitly directed toward an embodiment that is implemented in an aircraft actuation control system, it should be appreciated that it can be implemented in many types of vehicles and other actuation system designs, including those known now or hereafter in the art. Furthermore, the present invention is directed to the actuation of valves with rotatable valve members, such as butterfly valves, ball valves, throttle valves, or the like. It should be appreciated that other types of valves could be actuated by the proposed invention in which it is required to convert an input linear motion into an output rotary motion for valve operation.

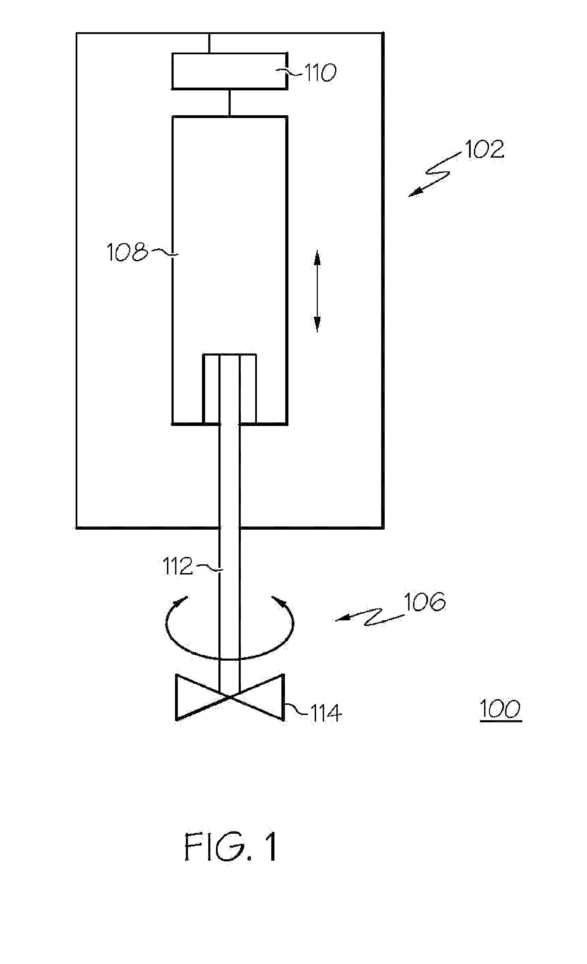

Turning now to the description and with reference first to FIG. 1, a functional block diagram of an exemplary valve and actuation control system 100 is shown. The system 100, which may be used, for example to control the actuation of one or more valves, includes an actuator assembly 102 and a valve assembly 106. The actuator assembly 102, which in this particular embodiment is preferably configured as a linear actuator, includes a piston drive mechanism 108, and a position sensor 110.

The piston drive mechanism 108 is configured, upon fuel activation to supply a linear drive force. The piston drive mechanism 108 is coupled to the valve assembly 106, including a valve plate 114, via a valve shaft 112. The linear drive force supplied from the piston drive mechanism 108 is transferred to the valve shaft 112 by way of a rotational coupler (described presently) in the piston drive mechanism 108 and a magnetic rotational coupler (described presently) that couples the piston drive mechanism to the valve shaft 112. The configuration of the rotational coupler and the magnetic rotational coupler in combination causes rotational motion of the valve shaft 112, thereby moving the associated valve plate 114 to a desired position. It should be noted that as schematically represented, the actuator assembly 102 is mounted directly above and in-line with the valve assembly 106 to eliminate the cantilevered configuration of a traditional piston drive valve.

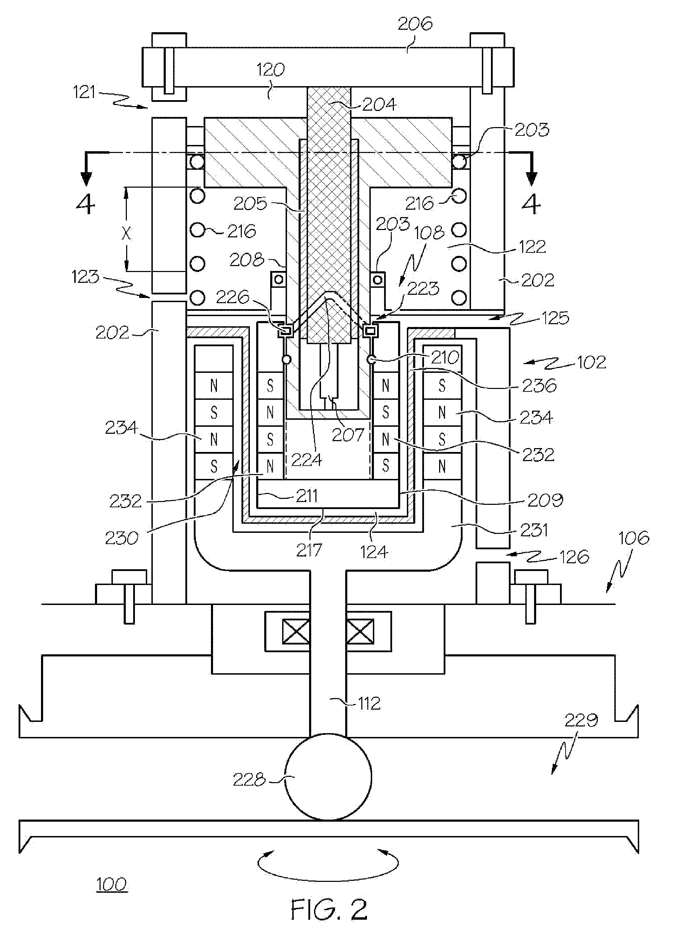

Turning to FIG. 2, although it should be understood that any type of linear actuator mechanism is anticipated by this application, an embodiment of a particular preferred physical implementation of the actuation control system 100, including the actuator assembly 102 and the valve assembly 106, described above is shown in partial cross-section, and will now be described in more detail. In this particular embodiment, the depicted actuator assembly 102 is implemented with the piston drive mechanism 108 disposed within and supported on a single actuator housing assembly 202. The actuator housing assembly 202 substantially encloses or supports the actuator components, and may include a plurality of self aligning bearings and seals, generally referenced 203, that are used to seal the device and support the actuator housing assembly 202 when mounted to a vehicle. In the illustrated embodiment, areas formed on either side of the piston drive mechanism 108 are not equal, thus a pressurized fuel present in the system 100 is not exposed, or only partially exposed, to the same amount of displacement area. This type of device is commonly referred to as a half area piston. An advantage of using a half area piston is that the fuel supply to the actuator assembly 102 does not require pressure regulation. Therefore, an un-regulated fuel pressure can be used to operate the valve assembly 106, thereby reducing the overall system cost and complexity. In this particular embodiment, the depicted actuator assembly 102 includes a plurality of fuel pressure areas: P_{head} 120, P_{rod} 122 and P_{drain} 124. A P_{head} port 121 and a Prod port 123 are provided to supply and drain fuel within the actuator assembly 102. A P_{drain} port 125 is provided to drain fuel that may leak from around the seals 203. In addition an air vent 126 is provided to vent air from within the actuator assembly 102.

Turning now to a description of the components mounted within or on the actuator housing assembly 202, it will be appreciated that in this particular embodiment the actuator assembly 102 is fuel actuated. The actuator housing assembly 202 includes a linear variable differential transducer (LVDT) 204, which includes an outer LVDT housing 205 that surrounds a portion of at least one LVDT rod(s) 207. In this particular embodiment, a top portion of the LVDT housing 205 serves as a cover 206 for the actuator housing assembly 202. In an alternate embodiment described herein, the LVDT sensor does not form the cover plate and a separately formed cover plate is used to form a cover of the actuator housing assembly 202. The LVDT 204 is positioned within, and the LVDT rod(s) 207 is configured to move with the piston drive mechanism 108. The LVDT 204 provides an output of voltage, current, or serial data proportional to the measurement position of the LVDT 204. This data enables position sensing of the piston drive mechanism 108. As will be described below, during operation the LVDT 204 further provides anti-rotation of the piston drive mechanism 108 within the actuator housing assembly 202.

The piston drive mechanism 108 includes a piston rod 208 that is linearly displaceable within a piston body 209. The piston rod 208 is configured to move over a preset range "x", as graphically indicated in FIG. 2, during actuation. At least one stationary piston guide 210 is fixedly positioned between the piston rod 208 and the piston body 209. The at least one piston guide 210 is preferably formed of a material having a low friction coefficient to enable sliding during linear stroke motion of the piston rod 208 within the piston body 209. In addition, at least one bearing or bushing surface (not shown) may be included to center and retain the piston body 209 in response to vertical motion of the piston rod 208. An optional coil spring 216 is disposed between the piston rod 208 and a portion of the actuator housing assembly 202. The coil spring 216 is depressed when the piston rod 208 is linearly displaced toward an end portion 217 of the piston body 209. The coil spring 216, when depressed, supplies a bias force that moves the piston rod 208 toward the cover plate 206.

In this particular embodiment, the piston rod 208 includes a rotational coupler 223 in the form of a helical groove 224 formed in an exterior surface of the piston rod 208. The piston body 209 includes a guide member 226 that is at least partially disposed within or inserted into the helical groove 224 of the piston rod 208. Thus, during actuation and linear displacement of the piston rod 208 within the piston body 209, the piston body 209 is rotationally displaced in response to a screw-drive like motion actuated by the helical groove 224 and the guide member 226.

The piston body 209 is rotationally coupled to an upper end portion 231 of the valve shaft 112 and provides rotational displacement of the valve shaft 112. More specifically, a magnetic rotational coupler 230 couples the piston body 209 to the valve shaft 112. The magnetic rotational coupler 230 is comprised of a plurality of inner magnets 232 disposed on, or embedded into a sidewall 211 of the piston body 209 and a plurality of outer magnets 234 disposed on, or embedded into an upper end portion 231 of the valve shaft 112. In this exemplary embodiment, the inner magnets 232 and the outer magnets 234 are formed in segmented sections with opposite polarity for maximum attraction. It is anticipated that the inner magnets 232 and the outer magnets 234 may be positioned within voids formed in the sidewalls of their respective structures and held in place by some means, such as an epoxy, or a metal liner. Alternatively, the inner magnets 232 and the outer magnets 234 may be formed as a plurality of cylindrical sleeves or rings that are integrated with the respective structures or adhered to the surface of their respective structures, or the like.

The rotary magnetic coupling between the piston body 209 and the upper end portion 231 of the valve shaft creates a magnetic field and provides rotational displacement of the valve shaft 112. The rotational displacement of the valve shaft 112 in turn rotates a valve plate 228, coupled to the valve shaft 112, thereby opening or closing the valve plate 228 and controlling flow there through an inner diameter of a valve flow body 229.

A sealing cover 236 is formed between a lower end of the piston drive mechanism 108, and more particularly the piston body 209, and the upper end portion 231 of the valve shaft 112. The sealing cover 236 may be welded in place and hermetically seals the piston drive mechanism 108 from the remainder of the actuator assembly 102 and the valve assembly 106. More particularly, fuel is sealed from reaching the actuation system, and more particularly is hermetically sealed from a portion of the outer magnetic rotational coupler 230. Any fuel in the system that leaks through seals 203 is drained through the P_{drain} port 125 and does not come in contact the valve shaft 112 and the outer magnets 234 that form a part of the magnetic rotational coupler 230. In this exemplary embodiment, the sealing cover 236 is formed of an inconel alloy. In an alternative embodiment, the sealing cover 236 may be formed of stainless steel, aluminum, or other non-ferromagnetic metals. More specifically, the sealing cover 236 may be formed of any material that is known to resist a wide range of severely corrosive environments and capable of hermetically sealing the piston drive mechanism 108.

As illustrated in FIG. 2, the piston drive mechanism 108 is substantially inline with the valve shaft 112 and the valve plate 228. In a preferred embodiment, the valve shaft 112 may be formed at an approximate 14°, offset relative to the valve shaft 112, to provide sealing capability of the valve plate 228 relative to the valve flowbody 229.

The design includes few moving parts and a redundant torque path that is different than a single link/lever arm attached to a piston end. The proposed actuator assembly 102 further reduces the size of the actuator assembly and eliminates the cantilevering of the actuator assembly above the valve flow body, resulting in a reliable and rigid valve design capable of withstanding vibration of the actuator during operation.

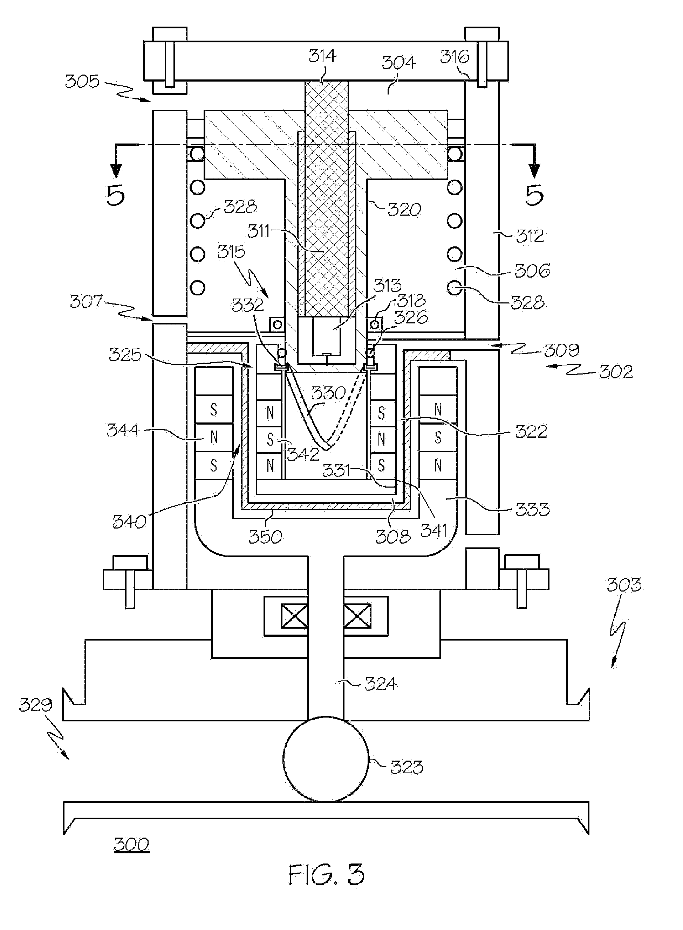

Referring now to FIG. 3, illustrated is a partial cross-sectional view of another embodiment of an actuation control system 300 according to the present invention. The actuation control system 300 is comprised of an actuator assembly 302 and a valve assembly 303. The actuation control system 300 illustrated in FIG. 3 is fuel actuated and includes similar physical implementations of the various actuator components described in FIG. 2. The depicted actuation control system 300 is a half area piston system in which included are fuel pressure areas P_{head} 304, P_{rod} 306 and P_{drain} 308. Similar to the previous embodiment, a P_{head} port 305, a P_{rod} port 307, and a P_{drain} port 309 are provided to supply and drain fuel within the actuator assembly 302.

The actuator assembly 302 includes an actuator housing 312, having housed therein an LVDT sensor 314, including an LVDT housing 311 and at least one LVDT rod 313, and a piston drive mechanism 315. A static seal 316 is created where the LVDT sensor 314 is coupled to the actuator housing 312. A dynamic seal 318 is created where the actuator housing 312 is coupled to the piston drive mechanism 315. Similar to the first embodiment, the piston drive mechanism 315 includes a piston rod 320 that is mounted for reciprocating linear stroke motion within a piston body 322.

At least one piston guide 326 is positioned to guide the piston rod 320 within the piston body 322 during linear displacement as previously described with respect to FIG. 2. An optional coil spring 328 is provided to aid in linear displacement of the piston body 320 during operation and provide a bias force. Similar to the first embodiment, a rotational coupler 325 is provided to aid in rotational displacement of the piston body 322. More specifically, in this particular embodiment, and in contrast to the previous embodiment, a helical groove 330 is formed on an interior surface 331 of the piston body 322. As illustrated, a guide member 332 is formed on the piston rod 320 and engages the helical groove 330. This engagement of the guide member 332 with the helical groove 330 provides the necessary linkage between the piston rod 320 and the piston body 322 during operation to rotationally displace the piston body 322.

During operation, the piston rod 320 translates and pushes on the rotational coupler 325 thus rotating the piston body 322 approximately 90°. This type of drive mechanism enables the actuator assembly 302 to be mounted directly above and inline with a valve shaft 324, thus eliminating any cantilevering of the piston drive mechanism relative to the valve shaft 324, resulting in a reliable and rigid valve design capable of withstanding vibration of the actuator during operation.

The piston body 322 is rotationally coupled to an upper end portion 333 of the valve shaft 324 and provides rotational displacement of the valve shaft 324. More specifically, a magnetic rotational coupler 340 couples the piston body 322 to the valve shaft 324 via a magnetic field. The magnetic rotational coupler 340 is comprised of a plurality of inner magnets 342 disposed on, or embedded into an external surface 341 of the piston body 322 and a plurality of outer magnets 344 disposed on, or embedded into the upper end portion 333 of the valve shaft 324. Similar to the previously described embodiment, the inner magnets 342 and the outer magnets 344 may be formed in segmented sections with opposite polarity for maximum attraction or as ring or sleeve like structures. It is anticipated that the inner magnets 342 and the outer magnets 344 may be positioned with respect to the piston body 322 and the upper end portion 333 of the valve shaft 324, respectively, as described with regard to the previous embodiment.

The rotary magnetic coupling between the piston body 322 and the upper end portion 333 of the valve shaft 324 provides rotational displacement of the valve shaft 324, which in turn rotates a valve plate 323, coupled to the valve shaft 324, thereby opening or closing the valve plate 323 and controlling flow there through the internal diameter of a valve flow body 329.

A sealing cover 350 is formed between the piston body 322 and the upper end portion 333 of the valve shaft 324. As previously described with respect to FIG. 2, the sealing cover 350 forms a hermetic seal and prevents any leakage of fuel from reaching the actuation system, and more particularly the magnetic rotational coupler 330. Any fuel leakage is drained through the P_{drain} port 309 and does not come in contact with the valve shaft 324 and the outer magnets 344 that form a part of the magnetic rotational coupler 340.

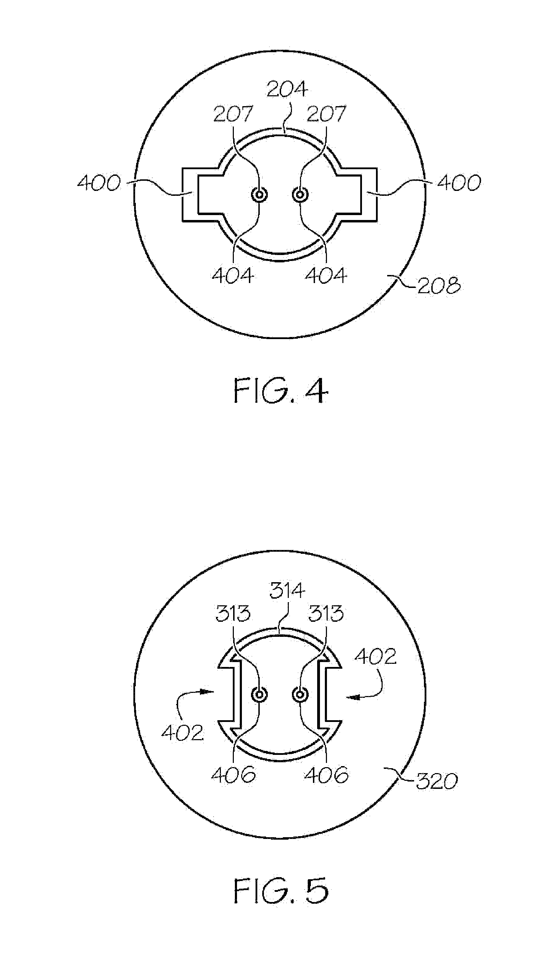

Referring now to FIG. 4, illustrated is a cross section view, taken along line 4-4 of FIG. 2, illustrating a portion of the LVDT 204 and a portion of the piston rod 208. To provide for anti-rotation of the piston rod 208 during operation, the LVDT 204 includes a plurality of protruding portions 400 as illustrated in FIG. 4. As an alternative embodiment, illustrated is a cross section view, taken along line 5-5 of FIG. 3, illustrating a portion of the LVDT sensor 314 and a portion of the piston rod 320 The LVDT sensor 314 may include a plurality of indents 402 as illustrated in FIG. 5. As previously described, the LVDT is coupled to the actuator housing assembly in each of the disclosed embodiments. During operation, the protruding portions 400 (FIG. 4) or indents 402 (FIG. 5) serve as an anti-rotation means, and prevent rotation of the piston rod 208 (FIG. 2) or the piston rod 320 (FIG. 3), respectively. A plurality of voids 404 (FIG. 4) and 406 (FIG. 5) represent cavities in the LVDT for positioning of the LVDT rods 207 (FIG. 2) and 313 (FIG. 3), respectively.

While a particular actuator assembly is described with respect to the preferred embodiments, it should be understood that any type of actuator assembly may implement the linear alignment of the actuator assembly and valve assembly of the present invention to reduce vibration effects of the actuator assembly by reducing the overhang moments, and to provide a more reliable device.

Accordingly, disclosed is an improved actuator assembly including a linear inline orientation, a rotational drive mechanism, and a magnetic rotational coupler. A hermetic seal is further formed about the piston drive. While exemplary embodiments have been presented in the foregoing detailed description of the invention, it should be appreciated that a vast number of variations exist. It should also be appreciated that the exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An actuator assembly (102) for operation of a rotational valve, the actuator assembly (102) comprising:
an actuator housing assembly (202);
a linear drive mechanism (108) comprised of a piston rod (208) mounted for reciprocating linear stroke motion within a piston body (209), the linear drive mechanism (108) disposed at least partially within the actuator housing assembly (202) and configured to translate therein without rotation;
a rotational coupler (223) coupling the piston rod (208) to the piston body (209), and configured to translate linear displacement of the piston rod (208) into rotation of the piston body (209);
a valve shaft (112) in substantially linear alignment with, and surrounding at least a portion of the piston body (209); and
a magnetic rotational coupler (230) coupling the piston body (209) to the valve shaft (112) and configured to translate rotational displacement of the piston body (209) into rotation of the valve shaft (112).

2. An actuator assembly (102) as claimed in claim 1, further comprising a linear variable differential transducer (LVDT) (204) disposed at least partially within the actuator housing assembly (202) and coupled to the linear drive mechanism(108), and configured to prevent linear drive mechanism rotation.

3. An actuator assembly (102) as claimed in claim 1, wherein the rotational coupler (325) comprises a helical groove (330) formed on an interior surface (331) of the piston body (322) and a reciprocating guide member (332) formed on the piston rod (320).

4. An actuator assembly (102) as claimed in claim 1, wherein the rotational coupler (223) comprises a helical groove (224) formed in the piston rod (208) and a reciprocating guide member (226) formed on an interior surface (331) of the piston body (209).

5. An actuator assembly (102) as claimed in claim 1, wherein the magnetic rotational coupler (230) comprises at least one magnet (232) coupled to the piston body (209) and at least one magnet (234) coupled to an upper end portion (231) of the valve shaft (112), and having a magnetic field formed therebetween.

6. An actuator assembly (102) for operation of a rotational valve, the actuator assembly (102) comprising:
an actuator housing assembly (202);
a piston rod (208) mounted for reciprocating linear stroke motion within a piston body (209) and along a longitudinal axis of the actuator housing assembly (202), the piston rod (208) and piston body (209) disposed at least partially within the actuator housing assembly (202) and configured to translate therein without rotation;
a rotational coupler (223) coupling the piston rod (208) within the piston body (209), and configured to translate linear displacement of the piston rod (208) into rotation of the piston body (209);
a valve shaft (112) including a first end portion coupled to the rotational valve (228) and a second end portion coupled to the piston body (209) and providing rotational displacement therein the second end (217) of the piston body (209), the valve shaft (112) in substantially linear alignment and surrounding at least a portion of the piston body (209); and
a magnetic rotational coupler (230) coupling the piston body (209) to the second end portion of the valve shaft (112) and configured to translate the rotational displacement of the piston body (209) into rotation of the valve shaft (112).

7. An actuator assembly (102) as claimed in claim 6, further including a linear variable differential transducer (LVDT) (204) disposed at least partially within the actuator housing assembly (202) and coupled to the piston rod (208) to eliminate rotation of the piston rod (208), the linear variable differential transducer (LVDT) (204) providing linear positioning of the piston rod (208) relative to the piston body (209).

8. An actuator assembly (102) as claimed in claim 6, wherein the rotational coupler (223) comprises a helical groove (330) formed on an interior surface (331) of the valve body (322) and a reciprocating guide member (332) formed on the piston rod (320).

9. An actuator assembly (102) as claimed in claim 6, wherein the rotational coupler (223) comprises a helical groove (224) formed on the piston rod (208) and a reciprocating guide member (226) formed on the valve body (209).

10. An actuator assembly (102) as claimed in claim 6, wherein the magnetic rotational coupler (230) comprises at least one magnet (232) coupled to the piston body (209) and at least one magnet (234) coupled to the upper end portion (231) of the valve shaft (112), thereby forming a magnetic field between the piston body (209) and the upper end portion (231) of the valve shaft (112).
